# EUROPEAN PATENT SPECIFICATION

(11) **EP 1 559 668 B1**
(45) Date of publication and mention of the grant of the patent: **25.07.2007**
(21) Application number: 04006673.0
(22) Date of filing: 19.03.2004
(51) Int. Cl.: B65G 21/14, B65G 43/00

(54) **Telescopic belt conveyor**
Teleskopisch ausfahrbarer Bandförderer
Transporteur à bande télescopiquement extensible

(30) Priority: 30.01.2004 EP 04002080
(43) Date of publication of application: 03.08.2005
(73) Proprietor: Caljan Rite-Hite ApS, 8361 Hasselager (DK)
(72) Inventor: Petersen, Erik Steen, DK-8270 Hojbjerg (DK)
(74) Representative: Niederkofler, Oswald

(56) References cited:
- EP-A- 0 122 573
- US-A- 3 835 980
- US-A- 5 351 809

## Description

### Technical Field

The present invention relates to a telescopic belt conveyor.

### Background Art

Telescopic belt conveyors of the introductory mentioned type are known and used in many connections and in many embodiments. US-A-4 643 299 discloses a telescopic belt conveyor and comprises a first basic conveyor section within a longitudinal housing, which at one end is provided with an opening , through which a number, by way of example two, three or more, of telescopic conveyor sections are arranged within each other. These telescopic conveyor sections may be telescopically moved in and out in relation to each other, as the respective conveyor sections are mutually connected by means of suitable system of drive members (illustratively chains) in relation to each other and in relation to said basic conveyor section, which is provided with a common drive system for controlling the telescopic movement.

However, known telescopic belt conveyors are encumbered with some disadvantages which may course serious working accidents. There exists a considered risk for that the personal especially during the telescopic movement of the respective telescopic conveyor sections may get hands or fingers squeezed between the respective conveyor sections. Another considered disadvantage is, that the drive chains of the intermediate conveyor sections and the conveyor belt itself may cause risk for damage or injury especially of hands and fingers by virtue of the undersides of the sections being exposed during outward and inward telescopic movements.

When designing telescopic belt conveyors of the type in question and when afterwards preparing the production it would of course be of great benefit in terms of inventory and tooling, if it becomes possible to work with a minimum of different parts when assembling the respective telescopic conveyor sections.

For example, US-A-3 835 980 discloses a conveyor structure according to the preamble of claim 1 which comprises a base section comprises a base section and a plurality of extendable conveyor sections mounted thereon. The conveyor sections are interconnected to move in and out respectively, i.e. each section is moved in an out from the respective adjacent section. Each section is provided with respective individually adapted parts building up the section and providing movements of the section.

Similar telescopic belt conveyor structures are disclosed in the documents US-A-5 351 809 and EP-A-0 122 573.

Thus, there is a need to improve the design of telescopic belt conveyors.

### Summary of the Invention

According to an aspect of the invention, a telescopic belt conveyor according to the subject-matter of claim 1 is provided. Further aspects and embodiments are set forth in the dependent claims, the following description and the drawings.

According to the embodiments, in a simple manner it hereby becomes possible to safe inventory and tooling by working with a minimum of different parts when assembling the respective telescopic conveyor sections.

In an embodiment, the telescopic belt conveyor according to the invention may provided such, that at least the outermost parts of said telescopic conveyor sections, which are exposed during said telescopic movement of said conveyor sections, may be provided totally downwardly closed, or with several partial wall parts. Hereby is achieved the effect of preventing penetration into the conveyor sections by hands or fingers, whereby at the same time it is possible to avoid said disadvantages including said personal damages especially of hands, fingers or other body parts.

In a simple manner according to one embodiment the sprocket wheels for leading the elongate drive members (chains) between the respective conveyor sections are placed in such a height, that the respective runs of said drive chains may be led through open rear walls of said intermediate telescopic conveyor sections and be anchored to a rear end part of one of said cooperating telescopic conveyor sections.

If a person by accident engages the underside of the conveyor section with hands or fingers during the telescopic movement between the conveyor section, when these are moved inwardly, the fact that the undersides of the telescopic conveyor sections may be provided with smooth and closed surfaces the said disadvantages or risks for damaging the hands or fingers may simply be prevented.

According to a preferred embodiment of the telescopic belt conveyor according to the invention one of said sprocket wheels for leading said upper run of the drive chain between said basic conveyor section and one of said intermediate conveyor sections is mounted on the inside of the rear wall of said basic conveyor section.

According to another preferred embodiment of the telescopic belt conveyor according to the invention one of said sprocket wheels for leading said upper run of the drive chain between said basic conveyor section and to a rear end of a second of said number of intermediate conveyor sections is mounted on the outside of the rear wall of a first of said number of intermediate conveyor sections.

According to a further preferred embodiment of the telescopic belt conveyor according to the invention one of said sprocket wheels for leading said upper run of the drive chain between a first of said number of intermediate conveyor section and to a rear end of said outermost conveyor section is mounted on the outside of the rear wall of a second of said number of intermediate conveyor sections.

The telescopic belt conveyor according to the invention may furthermore be provided such that anchor points for the drive chains of the intermediate conveyor sections have a raised position in relation to the bottom of the conveyor sections in question. Hereby is achieved that the combination of the chain guard, the raised anchor points and the belt guard present a practical closed bottom, although not the complete closed bottom of the preferred embodiment.

According to a still further aspect of the invention it may be advantageous, that at least said drive chains for operating said telescopic movement between said intermediate conveyor sections and said outermost telescopic conveyor are substituted by wires led over wire wheels substituting said sprocket wheels.

Only between the normally stationary basic conveyor section and the first of said number of intermediate telescopic conveyor section it is of particular importance that use are made of drive chains in order to secure accurate control of the operation of the telescopic movement because of the common drive-station operating with drive sprocket wheels and drive chains.

However, between the other telescopic conveyor sections it might be a considerably cheaper solution to make use of simple steel wires instead of more expensive drive chains, because the drive connections between said other telescopic conveyor section do not need the same accuracy because of the more simple mode of mutually cooperation. Of course it is of particular importance that the accuracy of the individual lengths and the proper tightening of the respective steel wires are secure in order to obtain optimal operation of the telescopic belt conveyor in question.

According to a still further and advantageous embodiment of the telescopic belt conveyor according to the invention there is provided a common control system with an integrated security system, which telescopic belt conveyor is characterized in that said security system comprises electric brake means, which are adapted to engage between the respective conveyor sections.

The brake means are controlled in such a manner, that they automatically brakes any telescopic movement of the respective conveyor sections, whether due to power failure, broken chains breaking, activation of security switches, or deactivation of the powered extension or retraction of the telescopic sections.

To achieve this function, the brakes means may be biased into a braking configuration, such as by springs, and powered or actuated into a release position. In this way, any action which would interrupt the power necessary to maintain the brakes means in the release position would cause the brake means to engage and stop any telescopic movement.

### Brief Description of Drawings

The invention is described in more details with reference to the accompanying drawings, in which:
- Fig. 1: shows a schematic plane side view of the course of said endless conveyor belt in an embodiment for a telescopic belt conveyor according to the invention,
- Fig. 2: shows a corresponding side view of an outer part of the telescopic belt conveyor shown in Fig. 1,
- Fig. 3: shows a plane schematic side view of an embodiment for a telescopic belt conveyor according to the invention - shown with the telescopic sections in a moved together situation,
- Fig. 4: shows a corresponding plane view of the course of drive chains between the respective telescopic conveyor sections - shown in a partly moved out position in relation to a basic conveyor section,
- Fig. 5: shows a side view of a outermost part of the telescopic belt conveyor shown in Fig. 4,
- Fig. 6: shows a simplified side sectional view through an outermost part of the belt conveyor cf. Fig. 3,
- Fig. 7: shows an enlarged circular sectional view B cf. Fig. 6,
- Fig. 8: shows a simplified transverse sectional view through an outermost part of the telescopic belt conveyor cf. Fig. 3,
- Fig. 9: shows an enlarged circular sectional view C cf. Fig. 8,
- Fig. 10: shows a plane schematic side view of a preferred embodiment for a telescopic belt conveyor according to the invention - shown with the telescopic sections in a moved together situation,

- Fig. 11: shows a corresponding plane view of the course of drive chains between the respective telescopic conveyor sections - shown in a partly moved out position in relation to a basic conveyor section,
- Fig. 12: shows a transverse sectional view through said preferred embodiment for a telescopic belt conveyor according to the invention, and
- Fig. 13: shows a further transverse sectional view through said preferred embodiment for e telescopic belt conveyor according to the invention.

### Detailed Description of Invention

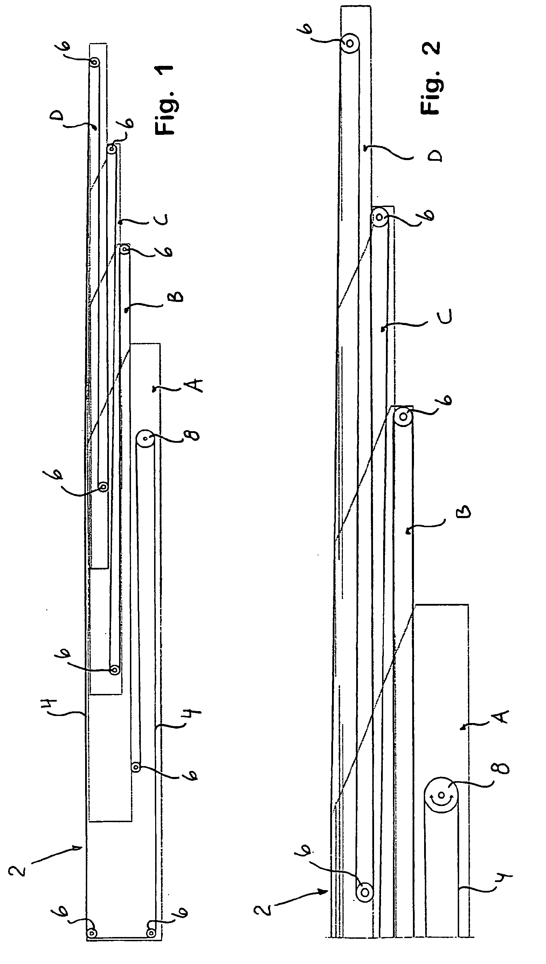

The telescopic belt conveyor 2 comprises four sections, namely a basic section A, two intermediate sections B and C and an outermost section D. The sections B, C and D may be moved in and out in a telescopic manner in relation to each other and in relation to the basic section A. The belt conveyor 2 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor, illustratively an electric driving motor, although hydraulic or other motor types could be used.

The telescopic movement of the sections B-C may be carried out in a variety of ways. In this embodiment, it is carried out by means of elongated drive members in the form of chains 10, 12, 14, 16 and 18, which are disposed at opposite long sides of the belt conveyor 2. The drive chains 10, 12, 14, 16 and 18 run between the respective sections A-D around stationary sprocket wheels, as opposite ends of each of the drive chains 10, 12, 14, 16 and 18 are anchored to two sections. The drive chains 10 are furthermore led around driving sprocket wheels 22, which are placed in the front end of section A, and which are driven by means of a not shown reversible electric driving motor. End parts of the drive chains 10 are at 24 anchored to a rearmost end part of section B, from where the drive chains 10 are led around stationary sprocket wheels 20 in rearmost end of the basic section A and forward around stationary sprocket wheels 21, around the drive sprocket wheels 22 and back again around stationary sprocket wheels 23 to anchor points 26 at the underside of section B in some distance in front of the rearmost end of section B.

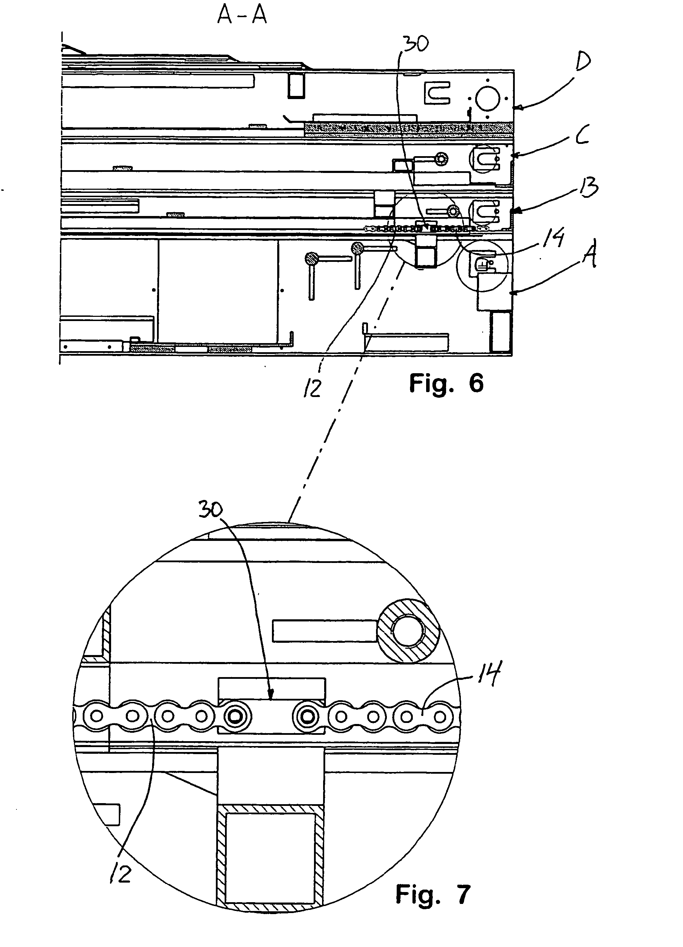

Similarly, end parts of the drive chains 12 are rearmost in section C anchored at 28, from where the drive chains 12 are led around stationary sprocket wheels 20 placed in the rearmost end of section B and forward to the rear sides of cranking chain mountings 30 (Fig. 7) in the front end of basic section A. End parts of the drive chains 14 are anchored to the front side of the same chain mounting 30 in the front end of basic section A, from where the drive chains 14 are led forward and around stationary sprocket wheels in the front end of section B and again backwards to anchor points 32 at the underside of section C in some distance in front of the anchor points 28.

In a similar manner, end parts of the drive chains 16 are anchored at 34 rearmost in section D, from where the drive chains 16 are led backwards around stationary sprocket wheels placed rearmost in section C and again forward to the rear sides of cranking chains mountings 30 in the front of section B. End parts of the drive chains 18 are anchored to the front sides of the same chain mounting 30 in the front of section B, from where the drive chains 18 are led forward and around stationary sprocket wheels 20 in the front end of section C and again led backwards to anchor points 36 at the underside of section D in some distance in front of the anchor points 34.

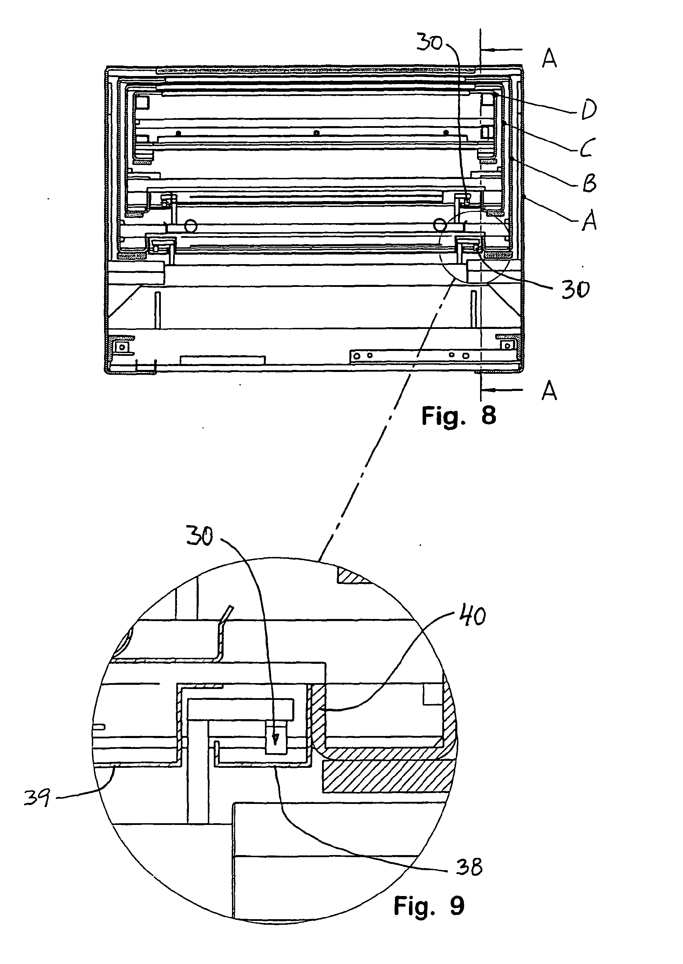

Figs. 6-9 show the position and more details about said cranking chain mountings 30, which are placed in the front ends of sections A and B, and which are used for the anchoring of end parts of the drive chains 12, 14, 16 and 18. Furthermore Figs. 8 and 9 show longitudinal coverings 38 for the lower course of the drive chains 14 and 18 by the intermediate sections B and C. These longitudinal coverings 38 are at both sides of the belt conveyor 2 suspended at the inside of longitudinal carrying girders 40 of the intermediate sections B and C.

The longitudinal coverings are made possible by the configuration of cranking mountings 30, which serve to raise the lower runs of chains 12, 14, 16 and 18 above their conventional positions without chain mountings 30. Absent this raising of the lower runs of the chains, the longitudinal coverings are not possible, as they would be in an interfering position between sections such as would prevent proper telescopic operation.

Preferably, the entire underside of each the telescopic conveyor sections is closed by the combination of the chain guard 38 and the belt guard 39 - shown to the left of fig. 9. The raised anchor points 30 for the chains allows the chain guard 38 to be positioned as it is, and fills the side gap that used to exist where the belt guard 39 ended and the unguarded chains ran. The combination of the chain guard 38, the bracket for holding mountings 30 and the belt guard 39 present what is in effect a closed bottom, although not the complete closed bottom of the preferred embodiment.

In general it applies that the respective conveyor sections B, C and D mutually and in relation to the basis conveyor section - as per see known - are supported and guided in the transverse direction by means of stationary rollers provided with external guiding flanges being cooperating with longitudinal carrying girders.

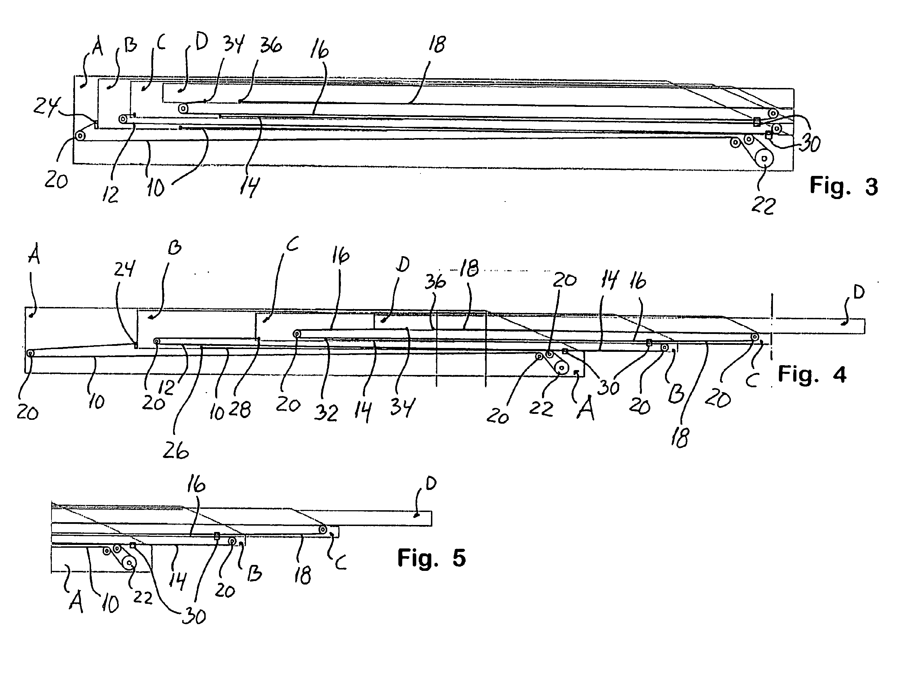

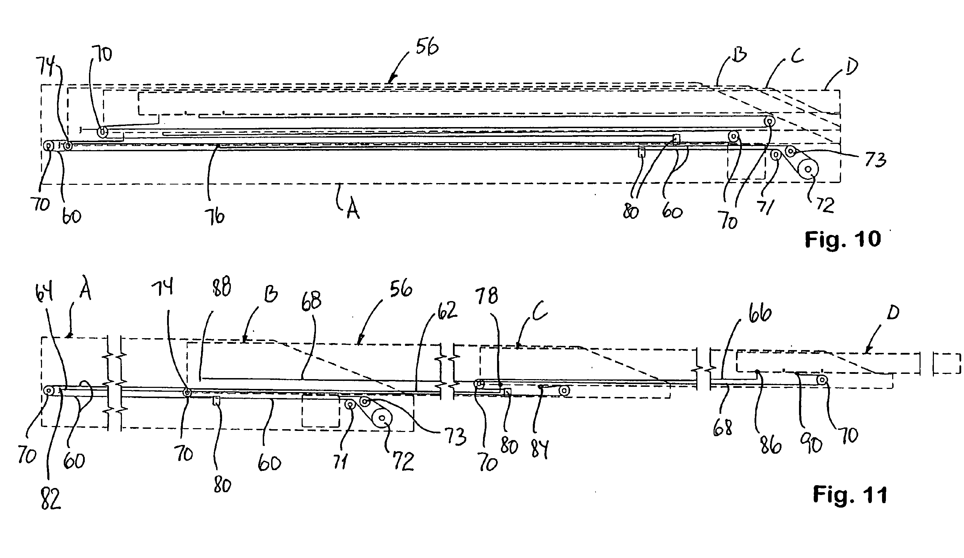

By a preferred embodiment for a telescopic belt conveyor 56 the course of the endless conveyor belt 4 in principle is quite the same as shown in Figs. 1 and 2, while the course of the respective drive chains as shown in Figs. 10-12 is indeed different than that of the course of the drive chains 10, 12, 14, 16 and 18 by the telescopic belt conveyor 2 as described above with reference to Figs. 3-9.

The telescopic belt conveyor 56 comprises four sections, namely a basic section A, two intermediate sections B and C and an outermost section D. The sections B, C and D may be moved in and out in a telescopic manner in relation to each other and in relation to the basic section A. The belt conveyor 56 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor such as an electric or hydraulic driving motor.

The telescopic movement of the sections B-C is carried out by means of drive chains 60, 62, 64, 66 and 68, which are disposed at opposite longitudinal sides of the belt conveyor 56 runs between the respective sections A-D around sprocket wheels being mounted stationary in the respective sections A-D, as opposite ends of each of the drive chains 60, 62, 64, 66 and 68 are anchored to two sections. The drive chains 60 are furthermore led around driving sprocket wheels 72, which are placed in the front end of section A, and which are driven by means of a not shown reversible electric or other driving motor. End parts of the drive chains 60 are at 74 anchored to a rearmost end part of section B, from where the drive chains 60 are led around stationary sprocket wheels 70 in rearmost end of the basic section A and forward around stationary sprocket wheels 71, around the drive sprocket wheels 72 and back again around stationary sprocket wheels 73 to anchor points 76 at the underside of section B in some distance in front of the rearmost end of section B.

End parts of the drive chains 62 are rearmost in section C anchored at 78, from where the drive chains 62 are led around sprocket wheels 70 mounted on the rearmost wall section B and forward to chain mountings 80 in the front end of basic section A. End parts of the drive chains 64 are anchored near the rearmost end of section A at 82, from where the drive chains 64 are led forward and around stationary sprocket wheels 70 in the front end of section B and again backwards to anchor points 84 at the underside of section C in some distance in front of the anchor points 78.

End parts of the drive chains 66 are anchored at 86 rearmost in section D, from where the drive chains 66 are led backwards around sprocket wheels 70 mounted on the rearmost wall of section C and again forward to chains mountings 80 in the front of section B. End parts of the drive chains 68 are near the rearmost end of section B at 88, from where the drive chains 68 are led forward and around stationary sprocket wheels 70 in the front end of section C and again led backwards to anchor points 90 at the underside of section D in some distance in front of the anchor points 86.

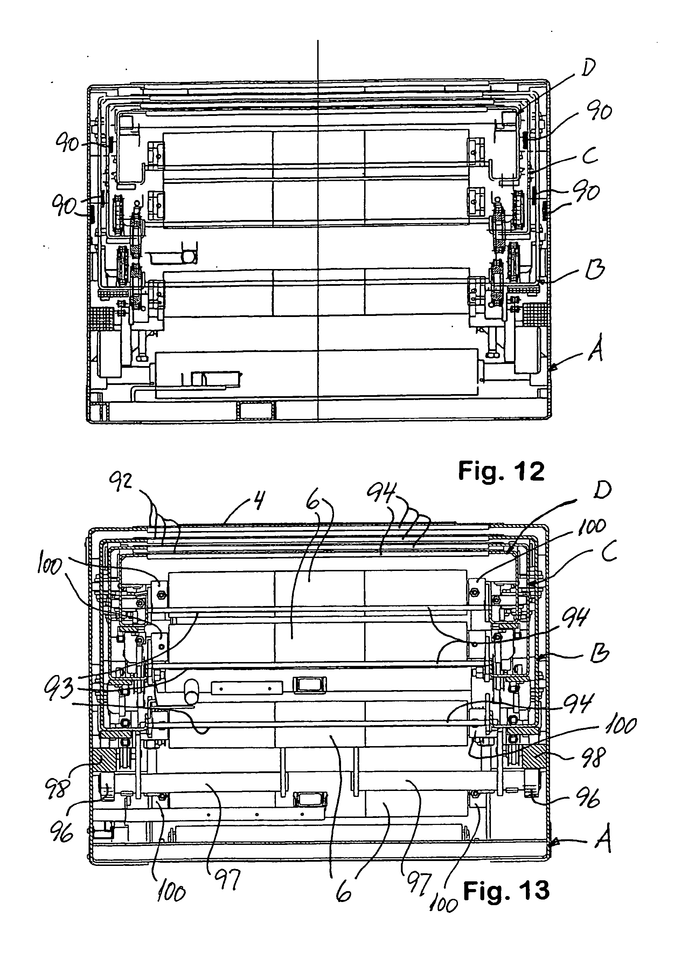

Fig. 12 shows that the various sprockets wheels 70 must be offset laterally to achieve the orientation of the chains shown in Figs. 10 and 11.

The above-described arrangement of the drive chains in this embodiment results in the fact that there is an absence of any chain runs (top or bottom) passing through the plane defined by the bottom of sections B, C or D, or at least the parts thereof exposed during telescopic movement. As a result, the undersides of these sections or at least the parts of the undersides being exposed during the telescopic movement may be provided with closed coverings preventing any possible penetration into the underside of the sections and thus preventing accidents with the results of damaging hands, fingers or other body parts, which could otherwise be damaged or injured by engaging said undersides during said telescopic movement.

The advantage is provided by the fact that the anchor points 82 and 88 for drive chains 64 and 68 are positioned at the rearmost walls of section A and B and are disposed at a suitable height to allow their bottom runs to be let through opening in the rear of sections B and C and stay above the undersides thereof. Further, the sprocket wheels 70 being mounted at the rearmost walls of sections B and C and at the bottom thereof makes is possible that also the drive chains 62 and 66 may be let through openings in the rear walls of sections B and C, and then have a lower run below the underside of the respective sections, but only in an area that will not be exposed during the telescopic movements Accordingly, the undersides of these sections or at least the parts of the undersides being exposed during the telescopic movements may be provided with the closed coverings.

In Fig. 12 the aforementioned brake means between the respective telescopic conveyor sections A-D is designated 90 - preferably the braking means 90 are mounted on the outer of the conveyor sections - or in other words the braking means 90 for braking the mutual telescopic movement between the basic conveyor section A and the intermediate conveyor section B are mounted on the outer basic conveyor section A.

In Fig. 13 is shown a further transverse sectional view through said embodiment for a telescopic belt conveyor according to the invention, where the benefit of the internal constant-width features of the conveyor sections are more clearly illustrated. Constant internal-width of the conveyor section may lead to the benefit of commonality of the following parts of the sections: Reversing rollers 6 for the belt 4, crossbars 94 between both the top and the bottom of the exterior carrying girders, upper skid plates 92 for the belt and/or bottom plate covers 93.

Furthermore the structure is scalable - independent of the telescopic conveyor is built in 3, 4 or 5 sections, all the mentioned parts of the telescopic sections can always be the same. The advantage lies in terms of inventory and tooling. In fig. 13 the length of all the reversing rollers 6 are the same independent of their placement in the respective sections A-D.

Also the length of upper skid plates 92 as well as a great numbers of crossbars 94 between the respective sides of both the top and the bottom of the carrying girders may be the same. The plate thickness of the crossbars 94 is about 12 mm, while the plate thickness of the carrying girders is about 6 mm.

A rear end part of section B is provided with carrying rollers 96 mounted on outer ends of shafts 97 and cooperating with solid elongate rail members 98 secured to the inside walls of the housing of section A. The respective reversing rollers 6 is provided with belt tightening devices 100 at both ends.

Alternatively, the telescopic belt conveyor according to the invention may be such provided, that at least a lower part of said drive chains of said intermediate telescopic conveyor sections and at least at an outer partial sector, which is exposed by executing said telescoping out of said conveyor sections, is covered downwardly by means of a longitudinal covering.

According to the invention the telescopic belt conveyor may furthermore be such provided, that said longitudinal covering consists of a covering with mainly L-shaped cross section, which is detachably mounted underneath said partial sector.

And in order to be able to get direct access to the drive chains for service the telescopic belt conveyor according to the invention may be such provided, that said mainly L-shaped cross-section provided covering at a rear side is provided with a number of mutually spaced hooks or the like, which are adapted for suspending the covering on the inside of longitudinal, carrying girders at opposite sides of said intermediate conveyor sections.

Is should be mentioned that the possibility of working with a totally downwardly closed wall parts, or with several partial wall parts, in order to prevent penetration into the conveyor sections by hands, fingers or other body part, may also be used by telescopic belt conveyors comprising only a basic conveyor section and only one telescopic conveyor section, that is a telescopic belt conveyor without any intermediate telescopic conveyor section.

Finally, it should be mentioned, that a possible further embodiment for a telescopic belt conveyor according to the invention may be provided such, that the telescopic movement of the respective conveyor section is effected by means of a drive system comprising only drive chains led over sprocket wheels between the respective conveyor sections at one side of the belt conveyor.

## Claims

1. A telescopic belt conveyor (2), comprising:
a basic conveyor section (A),
a number of intermediate telescopic conveyor sections (B, C), and an outermost telescopic conveyor section (D), said telescopic conveyor sections comprising carrying girders on their longitudinal sides, and said conveyor sections (A-D) being mutually connected by a number of elongate drive members (10, 12, 14, 16, 18) which are lead over sprocket wheels (20-23) for executing a telescoping movement in and out of said telescopic conveyor sections (B, C, D) by means of a common drive unit, and
an endless conveyor belt (4) constituting an active conveying track of said conveyor sections (A-D), which sections are drive-connected with a common drive system,
said conveyor sections (A-D) further comprising reversing rollers (6) for the belt (4), and upper skid plates (92) and crossbars (94) between the respective sides of the carrying girders of the sections,
**characterized in that**:
said telescopic conveyor sections (B,C,D) have a constant internal-width such that the length of the reversing rollers (6), the upper skid plates (92) and/or the crossbars (94) is the same independent of their placement in the respective sections (B,C,D), leading to the benefit of commonality of said parts of the these sections (B,C,D).

2. The telescopic belt conveyor according to claim 1, **characterized in that** at least the outermost parts of said telescopic conveyor sections (B,C,D), which are exposed during said telescopic movement of said conveyor sections, are provided totally downwardly closed by means of either one bottom wall part or several partial wall parts (38, 39).

3. The telescopic belt conveyor according to claim 1, **characterized in that** the sprocket wheels (20-23) for leading the elongate drive members (10, 12, 14, 16, 18) between the respective conveyor sections (A-D) are placed in such a height that the respective runs of said drive members may be led through open rear walls of said intermediate telescopic conveyor sections and be anchored to a rear end part (24, 28, 34) of one of said cooperating telescopic conveyor sections.

4. The telescopic belt conveyor according to claim 1, **characterized in that** one of said sprocket wheels (20-23) for leading said upper run of the drive member (10) between said basic conveyor section (A) and one of said intermediate conveyor sections (B) is mounted on the inside of the rear wall (24) of the basic conveyor section.

5. The telescopic belt conveyor according to claim 1, **characterized in, that** one of said sprocket wheels for leading said upper run of the drive member (10) between said basic conveyor section (A) and to a rear end (28) of a second of said number of intermediate conveyor sections (C) is mounted on the outside of the rear wall of a first of said number of intermediate conveyor sections (B).

6. The telescopic belt conveyor according to claim 1, **characterized in that** one of said sprocket wheels for leading said upper run of the drive member (16) between a first of said number of intermediate conveyor section (B) and to a rear end (34) of said outermost conveyor section (D) is mounted on the outside of the rear wall of a second of said number of intermediate conveyor sections (C).

7. The telescopic belt conveyor according to claim 1, **characterized in that** anchor points (24, 28) for the drive members (10, 12) of the intermediate conveyor sections have a raised position in relation to the bottom of the conveyor sections in question.

8. The telescopic belt conveyor according to claim 1, further comprising an electric control system with an integrated security system, wherein said security system comprises electric brake means (90), which are adapted to engage between the respective conveyor sections.

9. The telescopic belt conveyor according to claim 8, **characterized in that** the brake means (90) being adapted to engage when the telescopic movement is stopped, whether by power failure, chains breaking, activation of the security switches, or by the operator taking his finger off the motor control.

10. The telescopic belt conveyor according to claim 8, **characterized in that** the brake means (90) are adapted to be biased in a closed position closed and to be actuated to a release position such that power failure causes braking.

## Patentansprüche

1. Teleskop-Bandförderer (2), umfassend:
einen Basis-Förderabschnitt (A),
eine Anzahl von zwischenliegenden Teleskop-Förderabschnitten (B, C), und einen äußersten Teleskop-Förderabschnitt (D), wobei die Teleskop-Förderabschnitte an ihren Längsseiten Träger umfassen, und die Förderabschnitte (A-D) gegenseitig durch eine Anzahl von sich erstreckenden Antriebsgliedern (10, 12, 14, 16, 18) verbunden sind, die über Kettenräder (20-23) geführt werden, um eine Teleskopbewegung der Teleskop-Förderabschnitte (B, C, D) nach innen und außen durch eine gemeinsame Antriebseinheit auszuführen, und
ein Endlos-Förderband (4), das eine aktive Förderstrecke der Förderabschnitte (A-D) bildet, wobei die Abschnitte antriebsmäßig mit einem gemeinsamen Antriebssystem verbunden sind,
wobei die Förderabschnitte (A-D) weiterhin Umlenkrollen (6) für das Band (4) umfassen, und obere Gleitplatten (92) und Querstangen (94) zwischen den entsprechenden Seiten der Träger der Abschnitte,
**dadurch gekennzeichnet, dass**
die Teleskop-Förderabschnitte (B, C, D) eine konstante interne Breite aufweisen, so dass die Länge der Umlenkrollen (6), der oberen Gleitplatten (92) und/oder der Querstangen (94) unabhängig ihrer Anordnung in den entsprechenden Abschnitten (B, C, D) dieselbe ist, wodurch diese Teile gleichsam in den Abschnitten (B, C, D) genutzt werden können.

2. Teleskop-Bandförderer nach Anspruch 1, **dadurch gekennzeichnet, dass** wenigstens die äußersten Teile der Teleskop-Förderabschnitte (B, C, D), welche während der Teleskopbewegung der Förderabschnitte offengelegt sind, durch Bereitstellung entweder eines Bodenwandteils oder mehrerer Bodenwandteile (38, 39) nach unten ganz geschlossen ist.

3. Teleskop-Bandförderer nach Anspruch 1, **dadurch gekennzeichnet, dass** Kettenräder (20-23) zum Führen der sich erstreckenden Antriebsglieder (10, 12, 14, 16, 18) zwischen den entsprechenden Förderabschnitten (A-D) so in einer Höhe angeordnet sind, dass die entsprechenden Verläufe der Antriebsglieder durch offene Rückwände der zwischenliegenden Teleskop-Förderabschnitte geführt werden können und an einem hinteren Endteil (24, 28, 34) an einem der zusammenwirkenden Teleskop-Förderabschnitte verankert werden können.

4. Teleskop-Bandförderer nach Anspruch 1, **dadurch gekennzeichnet, dass** eines der Kettenräder (20-23) zum Führen des oberen Verlaufs des Antriebsgliedes (10) zwischen dem Basis-Förderabschnitt (A) und einem der zwischenliegenden Förderabschnitte (B) an der inneren Seite der Rückwand (24) des Basis-Förderabschnitts befestigt ist.

5. Teleskop-Bandförderer nach Anspruch 1, **dadurch gekennzeichnet, dass** eines der Kettenräder zum Führen des oberen Verlaufs des Antriebsgliedes (10) zwischen dem Basis-Förderabschnitt (A) und einem rückwärtigen Ende (28) eines zweiten der Anzahl von zwischenliegenden Förderabschnitten (C) an der Außenseite der Rückwand eines ersten der Anzahl von zwischenliegenden Förderabschnitten (B) befestigt ist.

6. Teleskop-Bandförderer nach Anspruch 1, **dadurch gekennzeichnet, dass** die Kettenräder zum Führen des oberen Verlaufs des Antriebsgliedes (16) zwischen einem ersten der Anzahl von zwischenliegenden Förderabschnitten (B) zu einem rückwärtigen Ende (34) des äußersten Förderabschnitts (D) an der Außenseite der rückwärtigen Wand eines zweiten der Anzahl von zwischenliegenden Förderabschnitten (C) befestigt ist.

7. Teleskop-Bandförderer nach Anspruch 1, **dadurch gekennzeichnet, dass** Ankerpunkte (24, 28) für die Antriebsglieder (10, 12) der zwischenliegenden Förderabschnitte eine erhöhte Position bezüglich der in Frage kommenden Förderabschnitte aufweist.

8. Teleskop-Bandförderer nach Anspruch 1, zusätzlich ein elektronisches Steuersystem umfassend, mit einem integrierten Sicherheitssystem, wobei das Sicherheitssystem ein elektrisches Bremsmittel (20) aufweist, das eingerichtet ist, zwischen den entsprechenden Förderabschnitten einzugreifen.

9. Teleskop-Bandförderer nach Anspruch 8, **dadurch gekennzeichnet, dass** das Bremsmittel (90) eingerichtet ist, einzugreifen, wenn die Teleskopbewegung gestoppt wird durch: Stromversorgungsmangel, Kettenbruch, Aktivierung von Sicherheitsschaltern oder durch einen Benutzer, der seinen Finger von einer Motorsteuerung nimmt.

10. Teleskop-Bandförderer nach Anspruch 8, **dadurch gekennzeichnet, dass** das Bremsmittel (90) eingerichtet ist, in einer geschlossenen Position vorgespannt zu sein und in eine Freigabeposition aktiviert werden zu können, so dass ein Stromversorgungsfehler eine Bremsung verursacht.

## Revendications

1. Transporteur à courroie télescopique (2), comprenant :
une section de transport de base (A),
un certain nombre de sections de transport télescopiques intermédiaires (B, C), et une section de transport télescopique la plus extérieure (D), lesdites sections de transport télescopiques comprenant des poutres de support sur leurs côtés longitudinaux, et lesdites sections de transport (A-D) étant mutuellement raccordées par un certain nombre d'éléments d'entraînement allongés (10, 12, 14, 16, 18) qui sont menés au-dessus de roues dentées (20-23) pour exécuter un déplacement télescopique à l'intérieur et à l'extérieur desdites sections de transport télescopiques (B, C, D) au moyen d'une unité d'entraînement commune, et
une courroie de transport sans fin (4) constituant une piste de transport active desdites sections de transport (A-D), lesquelles sections sont raccordées par entraînement à un système d'entraînement commun,
lesdites sections de transport (A-D) comprenant en outre des rouleaux de renversement de marche (6) pour la courroie (4), et des plaques de protection supérieures (92) et des traverses (94) entre les côtés respectifs des poutres de support des sections,
**caractérisé en ce que** lesdites sections de transport télescopiques (B, C, D) présentent une largeur interne constante de telle sorte que la longueur des rouleaux de renversement de sens de marche (6), des plaques de protection supérieures (92) et/ou des traverses (94) est la même indépendamment de leur placement dans les sections respectives (B, C, D), entraînant de manière avantageuse la similitude desdites parties de ces sections (B, C, D).

2. Transporteur à courroie télescopique selon la revendication 1, **caractérisé en ce qu'**au moins les parties les plus extérieures desdites sections de transport télescopiques (B, C, D), qui sont exposées pendant ledit déplacement télescopique desdites sections de transport, sont prévues en étant totalement fermées vers le bas au moyen soit d'une partie de paroi inférieure soit de plusieurs parties de paroi partielles (38, 39).

3. Transporteur à courroie télescopique selon la revendication 1, **caractérisé en ce que** les roues dentées (20-23) destinées à mener les éléments d'entraînement allongés (10, 12, 14, 16, 18) entre les sections de transport respectives (AD) sont placées à une hauteur telle que les courses respectives desdits éléments d'entraînement peuvent être menées à travers les parois arrière ouvertes desdites sections de transport télescopiques intermédiaires et être ancrées sur une partie d'extrémité arrière (24, 28, 34) d'une desdites sections de transport télescopiques en coopération.

4. Transporteur à courroie télescopique selon la revendication 1, **caractérisé en ce qu'**une desdites roues dentées (20-23) destinées à mener ladite course supérieure de l'élément d'entraînement (10) entre ladite section de transport de base (A) et une desdites sections de transport intermédiaires (B) est montée sur l'intérieur de la paroi arrière (24) de la section de transport de base.

5. Transporteur à courroie télescopique selon la revendication 1, **caractérisé en ce qu'**une desdites roues dentées destinées à mener ladite course supérieure de l'élément d'entraînement (10) entre ladite section de transport de base (A) et vers une extrémité arrière (28) d'une seconde parmi ledit certain nombre de sections de transport intermédiaires (C) est montée sur l'extérieur de la paroi arrière d'un premier parmi ledit certain nombre de sections de transport intermédiaires (B).

6. Transporteur à courroie télescopique selon la revendication 1, **caractérisé en ce qu'**une desdites roues dentées destinées à mener ladite course supérieure de l'élément d'entraînement (16) entre une première dudit certain nombre des sections de transport intermédiaires (B) et vers une extrémité arrière (34) de ladite section de transport la plus extérieure (D) est montée sur l'extérieur de la paroi arrière d'une seconde parmi ledit certain nombre de sections de transport intermédiaires (C).

7. Transporteur à courroie télescopique selon la revendication 1, **caractérisé en ce que** des points d'ancrage (24, 28) pour les éléments d'entraînement (10, 12) des sections de transport intermédiaires présentent une position surélevée par rapport au fond des sections de transport en question.

8. Transporteur à courroie télescopique selon la revendication 1, comprenant en outre un système de commande électrique doté d'un système de sécurité intégré, dans lequel ledit système de sécurité comprend des moyens de freinage électrique (90), qui sont adaptés pour se mettre en prise entre les sections de transport respectives.

9. Transporteur à courroie télescopique selon la revendication 8, **caractérisé en ce que** les moyens de freinage (90) sont adaptés pour se mettre en prise lorsque le déplacement télescopique est arrêté, que ce soit en raison d'une panne d'électricité, d'une rupture des chaînes, de l'activation des interrupteurs de sécurité, ou du fait que l'opérateur a retiré son doigt de la commande du moteur.

10. Transporteur à courroie télescopique selon la revendication 8, **caractérisé en ce que** les moyens de freinage (90) sont adaptés pour être sollicités dans une position fermée et être actionnés dans une position de libération de telle sorte qu'une panne de courant provoque le freinage.
